# EUROPEAN PATENT SPECIFICATION

(11) **EP 2 634 304 B1**
(45) Date of publication and mention of the grant of the patent: **28.08.2019**
(21) Application number: 12157437.0
(22) Date of filing: 29.02.2012
(51) Int. Cl.: D06F 39/12, D06F 37/26, F16L 3/00, H02G 3/32, H02G 3/04

(54) **Laundry machine with connector support**
Waschmaschine mit Verbindungsstütze
Machine à laver avec support de connecteur

(43) Date of publication of application: 04.09.2013
(73) Proprietor: Electrolux Home Products Corporation N.V., 1130 Brussels (BE)
(72) Inventor: Bruna, Alessandro, 33080 Porcia (PN) (IT); Striato, Daniele, 33080 Porcia (PN) (IT)
(74) Representative: Electrolux Group Patents

(56) References cited:
- EP-A1- 0 695 825
- EP-A1- 1 669 489
- WO-A2-2010/077108
- DE-B3-102007 052 073
- JP-A- 11 276 780
- KR-A- 20070 015 307
- US-A1- 2001 028 823

## Description

The present invention relates to a laundry machine (this expression including both a "simple" laundry washing machine, i.e. a washing machine adapted only to wash the laundry, and a washer/drier, i.e. a washing machine adapted both to wash and to dry the laundry) having a tub unit and at least one electric or signal-transferring cable.

Laundry machines usually comprise one or more kinds of sensors for measuring or detecting process parameters of the laundry treatment process. These sensors need to be connected by means of a wire or a cable to a processing unit and/or to an energy supply unit. Sensors can e.g. be installed on a wall of a tub of a laundry machine (e.g. at least partially contained inside the tub) in such a way that parameters of the process inside the tub can be measured or detected. Then the wire or cable is usually fixedly connected to the wall of the tub or to another component of the laundry machine, so that it cannot move freely.

When the laundry machine comprises a drum which rotates inside the tub and which is driven by a motor by a belt/pulley transmission system, it has to be secured that the wire or cable cannot get in touch with the moving belt, which could damage/tear away the wire or cable and/or the sensor.

The document WO 2007/126168 A1 discloses a conventional drum type washing machine which comprises a tub positioned within a cabinet and a drum rotatably installed inside the tub. The motor is provided at one side with a hall sensor and a hall sensor wire is positioned at a lower side of the rear wall of the tub and connected with the hall sensor to supply power to the hall sensor or to allow the hall sensor to be controlled by a controller.

When driving the motor for operation of the washing machine, vibration is generated and transmitted to the tub, causing the hall sensor wire positioned on the rear wall of the tub to move.

To solve this problem said document describes a fixing bracket installed to the rear wall of the tub to prevent a hall sensor wire from moving due to vibration. The fixing bracket comprises a body and a fixing part to secure the body. The body has a recess to allow a hall sensor wire to be seated on the recess. The fixing part serves to secure the body to the rear wall of the tub and has at least one fastening hole formed therethrough so as to allow a screw to be fastened to the tub.

However, such a fixing bracket is not easy to handle in a mounting process. The wire is fixed only in a short section and large parts of the wire can still move freely. Furthermore the wire is exposed to water in the case of a leakage. EP1669489 discloses washing machine having a container provided with an outer cover, and a clip arranged at a front side, wherein the container is manufactured by an injection molding procedure under application of a form tool. A drum is rotatably arranged in the container. A ribbed structure is formed at the outer cover or at the front sided clip of the container. Clamping holder for cables or lines is molded in ribs.

JPH11276780 discloses a washing machine in which a mechanism base is mounted on a lower surface of a water tank and driving device such as a motor is disposed in the mechanism base; a boss and a hook as locking projections for binding lead wire from the driving device are integrally projected from the lower surface of the water tank; a hole projecting downward is formed because the locking projection is inserted into the mechanism base, and leans wire is bound by the locking projection and is fixed to the mechanism base. These objects of the present invention are achieved by a laundry machine according to the characterizing portion of claim 1.

According to the present invention, as defined by claim 1, a laundry machine has a tub unit and at least one electric and/or signal-transferring cable, wherein at least one connector support is provided for being fixed (or: fastened, connected, mounted) to a wall of said tub unit, wherein said at least one electric and/or signal-transferring cable can be fixed (or: fastened, connected, mounted) to said connector support independently from the fixation (or: fastening, connection, mounting) of the connector support to the wall of said tub unit.

Thus, due to the independent fixations, the cable can, in a first mounting step, be fixed or mounted to the connector support and, in a subsequent mounting step, the connector support with the cable can be fixed or coupled or mounted to the wall of the tub unit. The mounting procedure of the cable is thereby facilitated and made more efficient. Further, direct contact of the cable to the tub wall is prevented. Alternatively, due to the independent fixations, vice versa, the connector support can first be mounted at or on the wall of the tub unit and then the cable can be fixed or mounted on the connector support. Also, in the advantageous case of releasable fixations, the independent fixations result in that releasing one of the fixations does not release the other fixation.

According to the invention said connector support comprises at least one fixation element to fix the cable to the connector support.

In such configuration the cable can be fixed to the connector support in a stable and easy way.

Also according to the invention, at least one fixation element is a hinge element having an open position status and a closed position status, wherein the cable is fixed to the support body in the closed position of said hinge element.

Thus, the fixation of the cable or wire to the connector support can be carried out manually in an easy way. No tools are necessary to lay the cable onto the connector support and to manually close the hinge elements. It is further easily possible to change the cable when the cable is damaged, because the hinge elements can be opened and closed repeatedly. Furthermore, the cable is partially enclosed by the hinge element and, thus, protected from liquid and mechanical damage.

Clearly any other fixation element can be used instead or in addition to the hinge element.

According to a further advantageous embodiment of the invention said connector support comprises a support body which has a first section, a second section and a bridging section, wherein the bridging section is arranged in such a way to be distanced from the wall of the tub unit when the connector support is fixed to the wall of the tub unit.

Such construction of the connector support allows adapting the connector support to a surface that has obstacles or different height levels and thus to guide the cable over these obstacles or different height levels. The support body can act as a supporting element for the cable.

According to a further advantageous embodiment of the invention the at least one fixation element comprises at least one snap element which can engage into at least one corresponding catch recess for fixing the fixation element detachably in a closed position and thereby fixes the cable to the connector support.

Thus, it is possible to pre-assemble the cable to the connector support and to reduce the risk of damage in the process of mounting the cable to a laundry machine. Further it is possible to detach the snap connection and to reopen the fixation element.

In a further advantageous embodiment of the invention the connector support comprises at least one groove; the cable (one or more cables) is at least partially placed therein.

By providing a groove it is possible to adapt the connector support to the shape and/or diameter of the cable or wire (or of two or more cables or wires) and to provide a better seat for the cable or wire. Thus, the seat of the cable on the connector support is improved.

In a further advantageous embodiment of the invention the cable can be pre-fixed to the connector support in a mounting process.

In such a configuration it is possible to attach the cable to the connector support before fixing it, e.g. by the fixation element. Thus, the cable is pre-fixed on the connector support, avoiding a possible jamming of the cable in the mounting process.

According to a further advantageous embodiment of the invention the connector support comprises a connector plate which has at least one fastener for fastening a connector or plug connected to the cable.

By fastening the connector or plug to the connector plate, an electric terminal can be formed in a stable and defined position, wherein the connector or plug can be easily detached from the connector plate for the case that cable and connector or the plug has to be changed.

According to a further advantageous embodiment of the invention the connector plate has two fasteners for fastening a connector or plug, wherein the fasteners are formed as snapping elements, the receptacle can be snapped thereto.

Thus, an even more stable fixation of the connector or plug can be provided.

In a further advantageous embodiment of the invention the connector support is formed as a one-piece part in an injection moulding process.

Thus, a connector support including all snap connections and fixation elements such as for example hinges (if provided) as well as the outer appearance of the support body can be provided in a single manufacturing step.

According to the invention, the connector support comprises at least one fixation element for fixing the connector support to the wall of the tub unit, for instance eyelets or threads or the like for fixation of screws or any other fixation elements for, preferably releasable, fixation, such as snapping elements or the like.

In a further advantageous embodiment of the invention the connector support comprises one or more hinge elements (preferably two) as fixation elements, each hinge element has a first fastening portion with a through hole and a second fastening portion with a through hole, wherein the first fastening portion overlaps the second fastening portion in a closed position of the respective hinge element, so that the through holes match and the connector support can be fixed to another component by means of screws extending through the through holes.

Thus, the connector support can be easily fixed to another component, wherein the closed position of the hinges is secured at the same time. Further it is secured that the connector support has to be detached completely before the cable can be removed. This prevents unintended damages in improper repair attempts.

In a further advantageous embodiment of the invention the connector support is at least partially arranged on said wall of said tub unit. For example the cable connects a sensor unit with a power supply and/or a processing unit electrically and/or electronically. Preferably, said cable is fixed on the connector support in a certain distance from the wall.

The cable and the electric or electronic connections of the cable are, thus, protected from water or other liquid residing on the surface of the back wall. E.g. this water could be escaped from a leakage caused by a clearance between tub unit and a condenser unit. Consequently, cables and receptacles which are supported by the connector support are protected from damage generated by such water or liquid.

In a further advantageous embodiment of the invention at least one drain rib is formed at the tub wall for guiding unwanted liquid on the surface of the wall, wherein the connector support is arranged on the wall in such way that the bridging section bridges the drain rib.

Thus, a laundry machine has means which guide away unwanted liquid, preventing possible damages caused by a contact of this liquid with electric or electronic components. In order to overcome the rib, the connector support is formed adapted to the rib (i.e. so shaped that it can be positioned over the rib) and guides the cable over it. The cable is therefore particularly secured from the liquid guided by the drain rib.

In a further advantageous embodiment of the invention a drum is arranged inside the tub unit which can be driven by a drive unit comprising a belt that extends in a region of the wall of said tub unit and in a certain distance from the wall, wherein said connector support fixes the cable at a certain distance from the belt.

Thus, the cable or wire is furthermore secured from damages caused by a moving belt, but also from the water or liquid on the surface of the back wall. In particular, to protect the cable from moving parts like the belt, it is advantageous to use a hinge element, because the cable can be enclosed completely in a section where it is particularly endangered.

The invention will be described in further detail with reference to the drawings, in which
- FIG 1: illustrates a perspective view of a laundry machine comprising a tub unit, wherein some parts of the machine have been removed;
- FIG 2: illustrates a rear view of a tub unit and a condenser unit having a connector support mounted thereto;
- FIG 3: illustrates a detailed perspective view of a connector support mounted to a wall of a tub unit;
- FIG 4: illustrates a detailed perspective view of a connector support in a pre-mounted status;
- FIG 5: illustrates a rear view of laundry machine with a tub unit and a connector support mounted thereto.

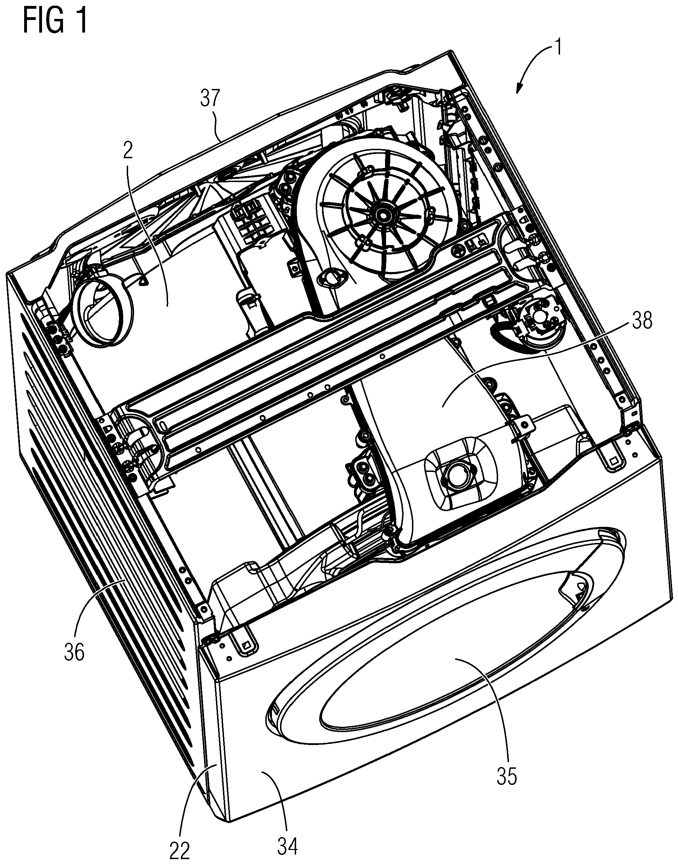

FIG 1 illustrates a perspective view of a laundry machine 1 comprising a tub unit 2. The laundry machine 1 has a casing 22 with a front wall 34, side walls 36 and a rear wall 37. A front door 35 is provided in the front wall 34 for providing access to a treatment chamber inside of the tub unit 2. Further an air duct 38 can be coupled to the tub unit 2 which can provide a flow of hot or warm air to the treatment chamber (in this embodiment the laundry machine is advantageously a washer/drier).

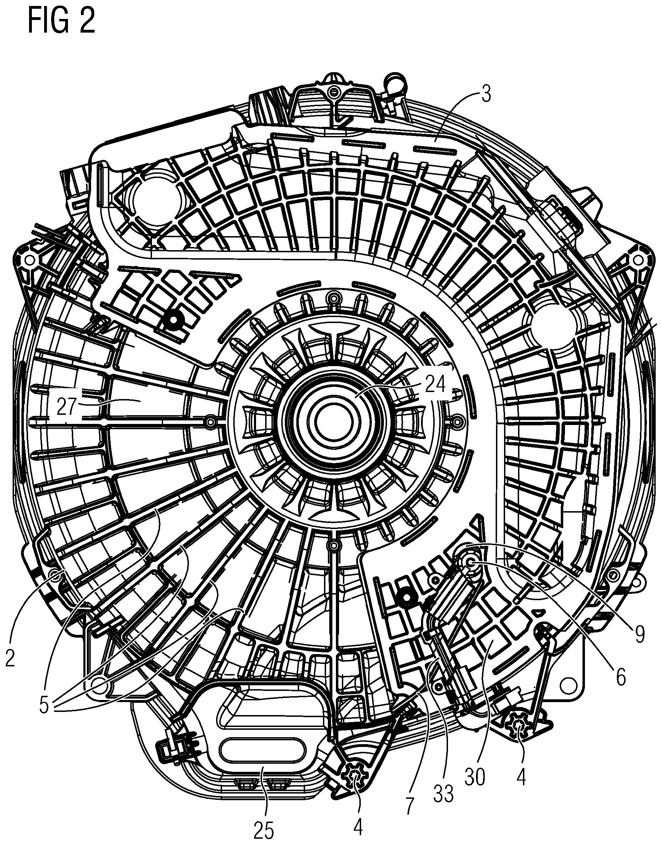

FIG 2 illustrates a rear view of a tub unit 2. A condenser unit 3 is advantageously attached to the tub unit 2. The tub unit 2 is intended to be built in a laundry machine such as a washing machine with drying function, so called washer/dryer, but can also be applied to washing machines without drying function or other laundry machine with cables or wires extending on an exterior wall of a treatment container such as the tub unit 2.

Enforcement ribs 5 are advantageously provided on a back wall 27 of the tub unit 2 for structural stabilisation of the tub unit 2. In a bottom region of the tub unit 2 a sump 25 is preferably provided. Support structures 4 are advantageously attached to the tub unit 2 for fastening a drive unit thereto. One or more bushings 24 are arranged in a central portion of the tub unit 2 for serving as a bearing for a drive shaft 29 of a drum being arranged inside the tub of the tub unit 2. The condenser 3 has advantageously a condenser wall 30 with an opening 9 recessed therein through which a sensor unit 6 is connectable to a connecting cable 20. Cable 20 shall be understood as one or more electric cables, e.g. for power supply or electric signals or data transferring cables such as fibre optics cable, but also as wires or the like.

The tub unit 2 and the condenser unit 3 can be manufactured by injection moulding and connected to each other by a plastics welding process.

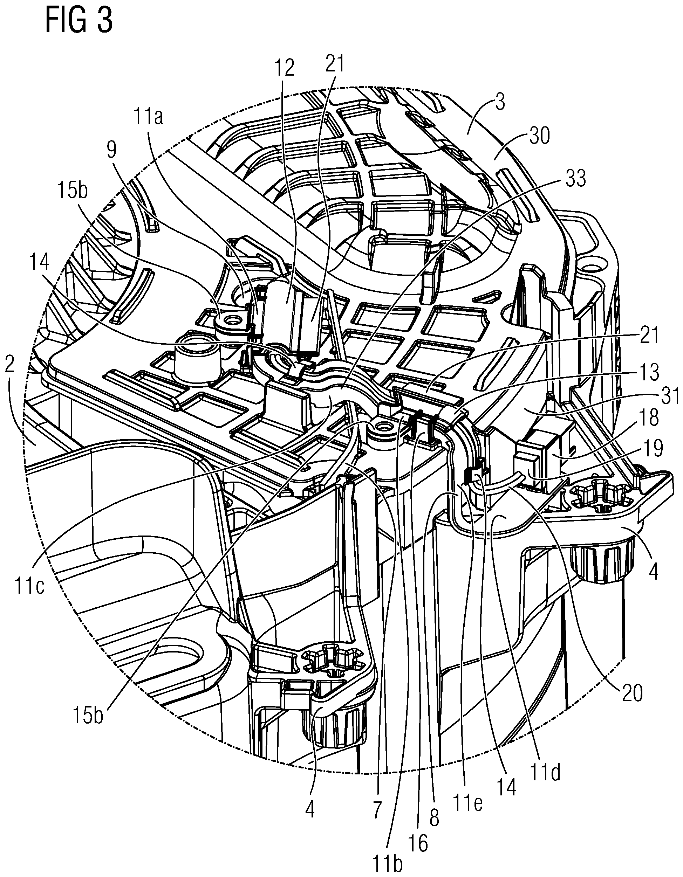

FIG 3 shows a detailed perspective view of an advantageous connector support 8 mounted to a wall of a tub unit 2. The condenser unit 3 has a condenser wall 30 which is provided with several ribs for enforcing the structural stability of the condenser unit 3. Advantageously, a drain rib 7 is formed to the condenser wall 30. The drain rib 7 is arranged a such way that liquid or water which escapes e.g. from a possible leakage in the welding connection between tub unit 2 and condenser unit 3 and flows down the condenser wall 30 can be collected, redirected and discharged to a region where the water cannot cause any damages to electric or electronic components. Such a leakage can e.g. originate from a clearance between a wall of the tub unit 2 and the condenser unit 3.

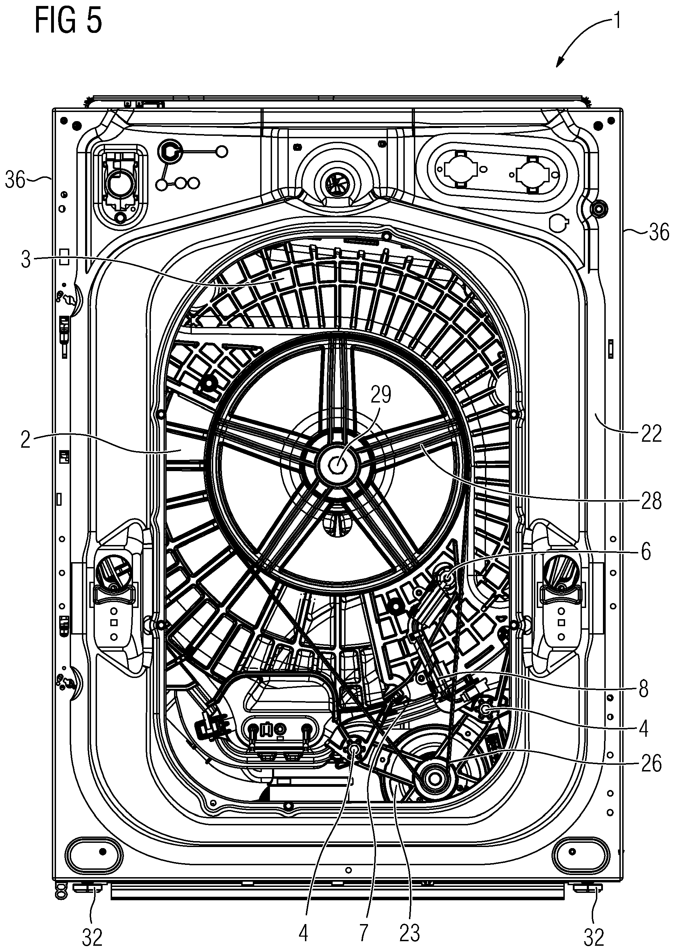

To the support structures 4 a drive unit is fixed for driving a drum of the laundry machine and further described in relation to FIG 5. Therefore, in the region of the support structures 4 electric and electronic components are provided. By means of the drain rib 7, a bypass is formed which protects in particular the drive unit below the drain rib from water.

The connector support 8 is arranged in its intended position on the condenser wall 30. Preferably, the connector support 8 has a support body 33 comprising a first section 11a and a second section 11b which are connected by a bridging section 11c. The first section 11a can be arranged adjacent to the opening 9 in the condenser wall 30, so that the sensor unit 6 can be electrically connected to a cable 20 that is fixed to the connector support 8. Further preferably a third section 11e connects the second section 11b and the connector plate 11d. Third section 11e of the connector plate 11d belongs also to the support body 33.

Advantageously the first section 11a has a first hinge element 12 and the second section 11b has a second hinge element 13. First and second hinge elements 12, 13 each can have at least one integral hinge 21. E.g. an integral hinge can be formed to the connector support in an injection moulding process and can allow the necessary movement of the hinges. Advantageously, an integral hinge has relatively resilient properties so that a risk of cable damage is reduced e.g. when the cable is accidentally jammed in the hinge. The cable 20 is preferably fixed and secured on the connector support 8 by the hinge elements 12, 13. Fixation clips 14 further secure the cable 20 to the connector support 8 advantageously. Particularly advantageous is that no screws are needed to fasten the cable 20 to the connector support 8

Furthermore, the connector support 8 can advantageously comprise a connector plate 11d which is connected to the second section 11b. The connector plate 11d can comprise fasteners 18 for fastening a connector or plug 19 for the cable 20. Advantageously, the third section 11e and the connector plate 11d are adapted to the form of the tub unit 2 and, thus, in the embodiment illustrated in enclosed figures, formed and dimensioned such that the connector plate 11d is arranged in a lower region of the tub unit 2 and adjacent to a lateral tub wall 31. Preferably, the connector plate 11d is formed such that the connector or plug 19 is arranged distanced from the condenser wall 30.

Preferably a first fastening portion 15a and a second fastening portion 15b are formed to the connector support 8 for fastening the connector support 8 to the back wall 27 of the tub unit 2 by means of screws or pins or the like (not shown). However, other fixation or fastening means or elements can be provided at the connector support 8 for fixation or fastening at the wall 27.

The connection or fixation or fastening of the connector support 8 to the wall 27 of the tub unit 2 is thus, according to the invention, independent from the fixation of the cable to or in the connector support 8, meaning that releasing one of the fixations does not release the other fixation. In particular the cable can be pre-mounted on or in the connector support 8 and then the connector support 8 with the mounted cable can be mounted on the wall of the tub unit 2 or, vice versa, the connector support 8 can first be mounted at or on the wall of the tub unit 2 and then the cable can be fixed or mounted on the connector support 8.

Advantageously the bridging section 11c is formed with a curvature so that the connector support 8 bridges over the drain rib 7 and the cable 20 does not get in contact to the drain rib 7. The liquid or water which flows along the drain rib 7 can flow through under the bridging section 11c and reach a region of the drain rib 7 where it can drip off safely.

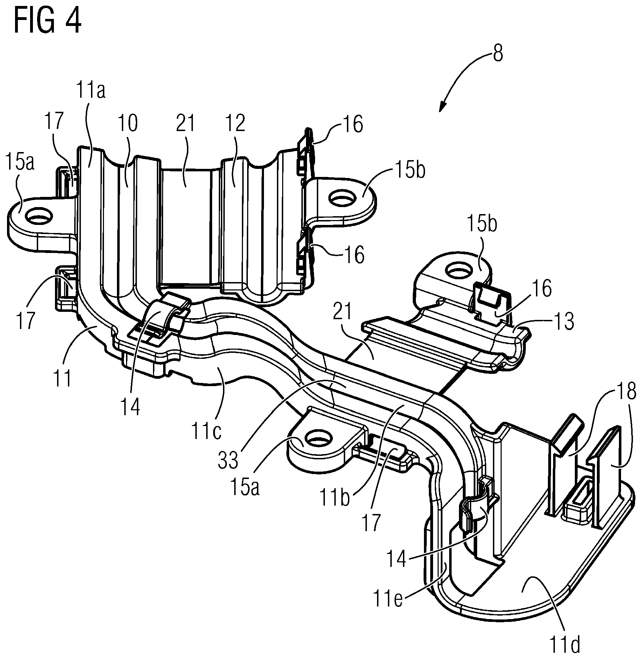

FIG 4 shows a detailed perspective view of a connector support 8 in a pre-mounted status. First hinge element 12 and second hinge element 13 are provided in a open position. Preferably a groove 10 is formed to first section 11a, second section 11b, bridging section 11c and third section 11e, wherein a cable or a wire can be accommodated.

Advantageously, each of the hinge elements 12, 13 comprises a snap element 16 which can engage into a catch recess 17 for closing the hinge element 12, 13 and to fix it in a closed position.

It is advantageous, that, in a mounting process, the connector support 8 is provided in this open position. The cable 20 with the connector or plug 19 is inserted into the groove 10, wherein the connector or plug 19 is snapped to the fasteners 18. In this status, the sensor unit 6 can be connected to an opposing end of the cable 20. It is also possible that the sensor unit 6 can be pre-arranged in its intended seat in the back wall 27 of the tub unit 2 and connected to the cable 20 after mounting the connector support 8 to the back wall 27.
In a further preferred embodiment the sensor unit 6 is already provided at the free end of the cable 20 (i.e. the end of the cable not provided with the connector or plug 19).

Inserted to the groove 10, the cable 20 is preferably pre-fixed by the fixation clips 14 within the groove 10. The hinge elements 12, 13 can be closed, the snap elements 16 snap into the catch recesses 17 and fix the hinge elements 12, 13 in their closed position. Thus, the cable 20 is fixedly secured to the connector support 8.

In a closed position, advantageously, the second fastening portions 15b of the hinge elements 12, 13 overlap fittingly the first fastening portions 15a. The connector support 8 can be mounted in this pre-assembled status to the back wall 27 of the tub unit 2. By means of holes in the fastening portions 15a, 15b screws can fasten the connector support 8 to the back wall 27.

After mounting or attaching the connector support 8 to the back wall 27, the sensor unit 6 can be connected to the cable 20 (if the sensor unit 6 is not already provided on the cable 20) and the receptacle 20 can be connected to other connecting elements as for power supply or data transfer.

FIG 5 shows a laundry machine 1 with a tub unit 2 and a condenser unit 3 built in a casing 22. A drum (not shown) which can be driven by a drive unit is arranged inside the tub unit 2. The drive unit preferably comprises a motor 23 which is fixed to the support structures 4, a belt 26 driven by said motor 23 and a drive wheel 28 which in turn is driven by said belt 26. The drive wheel 28 is connected via a drive shaft 29 to the drum and a rotation of the drive wheel 28 results in a rotation of the drum.

Duly positioned, the casing 22 preferably stands on feet 32, so that the motor 23 is arranged in a lower region of the laundry machine 1, adjacent to a bottom (not shown) of the casing 22. In this position of the laundry machine 1, the drain rib 7 is advantageously oriented such that it can collect liquid or water from a region above and discharge it distanced to the motor 23.

The sensor unit 6 is preferably positioned in a region of the tub unit 2 and advantageously of the condenser unit 3 (if condenser unit 3 is provided), where the belt 26 moves during operation of the drum. Therefore it is advantageous, that the cable 20 which connects the sensor unit 6 to a power supply or a processing unit are accurately fixed in this region, so that a damage of the cable 20 by the moving belt 26 or other moving parts is avoided. The connector support 8 is preferably arranged in this region to guide and fix the cable 20 from the sensor unit 6 to a region on the lateral wall 31 of the tub.

The connector support 8 is arranged on the back wall 27 and between the back wall 27 and the belt 26. When the belt 26 moves in order to rotate the drive wheel 28, the cable 20 could be damaged when it is unfixed. Therefore, the cable 20 is advantageously fixed in a defined position distanced from the back wall 27 and distanced from the belt 26.

Further, the connector support 8 is advantageously formed and arranged such that the connector plate 11d is positioned near by or adjacent to the lateral tub wall 31 and distanced from the back wall 27. In this configuration the connector or plug 19 is arranged laterally in a distance from the back wall (27) and therefore liquid dripping off the back wall 27 cannot reach the connector or plug 19.

## Claims

1. Laundry machine (1) having a tub unit (2) and at least one electric and/or signal-transferring cable (20), wherein said laundry machine (1) comprises at least one connector support (8) for being fixed to a wall of said tub unit (2), wherein said at least one electric and/or signal-transferring cable (20) can be fixed to said connector support (8) independently from the fixation of the connector support (8) to the wall of said tub unit (2), wherein said connector support (8) comprises at least one fixation element (12, 13, 16) to fix the cable (20) to the connector support (8),
wherein said connector support (8) comprises at least one fixation element (15a, 15b) for fixing the connector support (8) to said wall (27) of said tub unit (2), **characterized in that** said at least one fixation element is a hinge element (12, 13) having an open position status and a closed position status, wherein the cable (20) is fixed to a support body (33) in the closed position of said hinge element (12, 13).

2. Laundry machine (1) according to claim 1, wherein the connector support (8) comprises one or more hinge elements (12, 13) as fixation elements, each hinge element (12, 13) has a first fastening portion (15a) with a through hole and a second fastening portion (15b) with a through hole, wherein the first fastening portion (15a) overlaps the second fastening portion (15b) in a closed position of the respective hinge element (12, 13), so that the through holes match and the connector support (8) can be fixed to another component by means of screws extending through the through holes.

3. Laundry machine (1) according to one of the preceding claims, wherein said connector support (8) comprises a support body (33) which has a first section (11a), a second section (11b) and a bridging section (11c), wherein the bridging section (11c) connects the first section (11a) and the second section (11b) and wherein the bridging section (11c) is arranged in such a way to be distanced from said wall of said tub unit (2) when said connector support (8) is fixed to said wall of said tub unit (2).

4. Laundry machine according to claim 3, wherein at least one drain rib (7) is formed in or to said wall (27) of the tub unit (2) for guiding unwanted liquid on the surface of the wall (27), wherein the connector support (8) is arranged on the wall (27) in such way that the bridging section (11c) bridges the drain rib (7).

5. Laundry machine (1) according to one of the previous claims, wherein the at least one fixation element comprises at least one snap element (16) which can engage into at least one corresponding catch recess (17) for fixing the fixation element detachably in a closed position and thereby fixing the cable (20) to the connector support (8).

6. Laundry machine (1) according to one of the preceding claims, wherein the connector support (8) comprises at least one groove (10), into which the cable (20) is at least partially placed.

7. Laundry machine (1) according to one of the preceding claims, wherein the cable (20) is pre-fixed to the connector support (8) in a mounting process.

8. Laundry machine (1) according to one of the preceding claims, wherein the connector support (8) comprises a connector plate (11d) which has at least one fastener (18) for fastening a connector or plug (19) connected to the cable (20).

9. Laundry machine (1) according to claim 8, wherein the connector plate (11d) has two fasteners (18) for fastening a connector or plug (19), wherein the fasteners are formed as snapping elements and the receptacle can be snapped thereto.

10. Laundry machine (1) according to one of the preceding claims, wherein the connector support (8) is formed as a one-piece part in an injection moulding process.

11. Laundry machine according to one of the preceding claims, wherein the cable (20) connects a sensor unit (6) with a power supply and/or a processing unit electrically and/or electronically and/or wherein said cable (20) is fixed on the connector support (8) in a certain distance from the wall (27).

12. Laundry machine according to one of the preceding claims, wherein a drum is arranged inside the tub unit (2) which can be driven by a drive unit comprising a belt (26) that extends in a region of the wall (27) of said tub unit (2) and in a certain distance from the wall (27), wherein said connector support (8) fixes the cable (20) in a certain distance from the belt (26).

## Patentansprüche

1. Waschmaschine (1) mit einer Botticheinheit (2) und zumindest einem Elektro- und/oder Signalübertragungskabel (20), wobei die Waschmaschine (1) zumindest eine Verbinderhalterung (8) zur Befestigung an einer Wand der Botticheinheit (2) umfasst, wobei das zumindest eine Elektro- und/oder Signalübertragungskabel (20), unabhängig von der Befestigung der Verbinderhalterung (8), an der Wand der Botticheinheit (2) an der Verbinderhalterung (8) befestigt sein kann, wobei die Verbinderhalterung (8) zumindest ein Befestigungselement (12, 13, 16) zum Befestigen des Kabels (20) an der Verbinderhalterung (8) umfasst,
wobei die Verbinderhalterung (8) zumindest ein Befestigungselement (15a, 15b) zum Befestigen der Verbinderhalterung (8) an der Wand (27) der Botticheinheit (2) umfasst,
**dadurch gekennzeichnet, dass** das zumindest eine Befestigungselement ein Gelenkelement (12, 13) mit einem offenen Stellungszustand und einem geschlossenen Stellungszustand ist, wobei das Kabel (20) in der geschlossenen Stellung des Gelenkelements (12, 13) an einem Halterungskörper (33) befestigt ist.

2. Waschmaschine (1) nach Anspruch 1, wobei die Verbinderhalterung (8) ein oder mehrere Gelenkelemente (12, 13) als Befestigungselemente umfasst, wobei jedes Gelenkelement (12, 13) einen ersten Befestigungsteil (15a) mit einem Durchgangsloch und einen zweiten Befestigungsteil (15b) mit einem Durchgangsloch aufweist, wobei der erste Befestigungsteil (15a) in einer geschlossenen Stellung des jeweiligen Gelenkelements (12, 13) den zweiten Befestigungsteil (15b) überlappt, sodass die Durchgangslöcher übereinstimmen und die Verbinderhalterung (8) mit Hilfe von Schrauben, die sich durch die Durchgangslöcher erstrecken, an einer anderen Komponente befestigt werden kann.

3. Waschmaschine (1) nach einem der vorangehenden Ansprüche, wobei die Verbinderhalterung (8) einen Halterungskörper (33) umfasst, der einen ersten Abschnitt (11a), einen zweiten Abschnitt (11b) und einen Brückenabschnitt (11c) aufweist, wobei der Brückenabschnitt (11c) den ersten Abschnitt (11a) und den zweiten Abschnitt (11b) verbindet und wobei der Brückenabschnitt (11c) so angeordnet ist, dass er von der Wand der Botticheinheit (2) beabstandet ist, wenn die Verbinderhalterung (8) an der Wand der Botticheinheit (2) befestigt ist.

4. Waschmaschine nach Anspruch 3, wobei in oder an der Wand (27) der Botticheinheit (2) zumindest eine Ablaufrippe (7) zum Ableiten von unerwünschter Flüssigkeit an der Oberfläche der Wand (27) ausgebildet ist, wobei die Verbinderhalterung (8) so an der Wand (27) angeordnet ist, dass der Brückenabschnitt (11c) die Ablaufrippe (7) überbrückt.

5. Waschmaschine (1) nach einem der vorangehenden Ansprüche, wobei das zumindest eine Befestigungselement zumindest ein Schnappelement (16) umfasst, das in zumindest eine entsprechende Rastausnehmung (17) eingreifen kann, um das Befestigungselement lösbar in einer geschlossenen Stellung zu befestigen und dadurch das Kabel (20) an der Verbinderhalterung (8) zu befestigen.

6. Waschmaschine (1) nach einem der vorangehenden Ansprüche, wobei die Verbinderhalterung (8) zumindest eine Nut (10) umfasst, in die das Kabel (20) zumindest teilweise eingesetzt wird.

7. Waschmaschine (1) nach einem der vorangehenden Ansprüche, wobei das Kabel (20) in einem Montagevorgang an der Verbinderhalterung (8) vorbefestigt wird.

8. Waschmaschine (1) nach einem der vorangehenden Ansprüche, wobei die Verbinderhalterung (8) eine Verbinderplatte (11d) umfasst, die zumindest ein Befestigungsmittel (18) zum Befestigen eines mit dem Kabel (20) verbundenen Verbinders oder Steckers (19) aufweist.

9. Waschmaschine (1) nach Anspruch 8, wobei die Verbinderplatte (11d) zwei Befestigungsmittel (18) zum Befestigen eines Verbinders oder Steckers (19) aufweist, wobei die Befestigungsmittel als Schnappelemente ausgebildet sind und die Buchse daran aufgeschnappt werden kann.

10. Waschmaschine (1) nach einem der vorangehenden Ansprüche, wobei die Verbinderhalterung (8) in einem Spritzgussvorgang als ein einstückiges Teil ausgebildet wird.

11. Waschmaschine nach einem der vorangehenden Ansprüche, wobei das Kabel (20) eine Sensoreinheit (6) elektrisch und/oder elektronisch mit einer Stromversorgung und/oder einer Verarbeitungseinheit verbindet und/oder wobei das Kabel (20) in einem bestimmten Abstand zu Wand (27) an der Verbinderhalterung (8) befestigt ist.

12. Waschmaschine nach einem der vorangehenden Ansprüche, wobei innerhalb der Botticheinheit (2) eine Trommel ausgebildet ist, die durch eine Antriebseinheit angetrieben werden kann, die einen Riemen (26) umfasst, der sich in einem Bereich der Wand (27) der Botticheinheit (2) und in einem bestimmten Abstand zur Wand (27) erstreckt, wobei die Verbinderhalterung (8) das Kabel (20) in einem bestimmten Abstand zum Riemen (26) befestigt.

## Revendications

1. Machine (1) à laver dotée d'une unité (2) de cuve et d'au moins un câble (20) électrique et/ou de transfert de signaux, ladite machine (1) à laver comportant au moins un support (8) de connecteur destiné à être fixé à une paroi de ladite unité (2) de cuve, ledit ou lesdits câbles (20) électriques et/ou de transfert de signaux pouvant être fixés audit support (8) de connecteur indépendamment de la fixation du support (8) de connecteur à la paroi de ladite unité (2) de cuve, ledit support (8) de connecteur comportant au moins un élément (12, 13, 16) de fixation servant à fixer le câble (20) au support (8) de connecteur,
ledit support (8) de connecteur comportant au moins un élément de fixation (15a, 15b) servant à fixer le support (8) de connecteur à ladite paroi (27) de ladite unité (2) de cuve, **caractérisé en ce que** ledit ou lesdits éléments de fixation sont un élément (12, 13) de charnière possédant un état de position ouverte et un état de position fermée, le câble (20) étant fixé à un corps (33) de support dans la position fermée dudit élément (12, 13) de charnière.

2. Machine (1) à laver selon la revendication 1, le support (8) de connecteur comportant un ou plusieurs éléments (12, 13) de charnière en tant qu'éléments de fixation, chaque élément (12, 13) de charnière comprenant une première partie (15a) d'accrochage dotée d'un trou débouchant et une deuxième partie (15b) d'accrochage dotée d'un trou débouchant, la première partie (15a) d'accrochage chevauchant la deuxième partie (15b) d'accrochage dans une position fermée de l'élément (12, 13) respectif de charnière, de sorte que les trous débouchants coïncident et que le support (8) de connecteur peut être fixé à un autre composant au moyen de vis s'étendant à travers les trous débouchants.

3. Machine (1) à laver selon l'une des revendications précédentes, ledit support (8) de connecteur comportant un corps (33) de support qui comprend un premier tronçon (11a), un deuxième tronçon (11b) et un tronçon (11c) de pontage, le tronçon (11c) de pontage reliant le premier tronçon (11a) et le deuxième tronçon (11b) et le tronçon (11c) de pontage étant disposé de manière à être distant de ladite paroi de ladite unité (2) de cuve lorsque ledit support (8) de connecteur est fixé à ladite paroi de ladite unité (2) de cuve.

4. Machine à laver selon la revendication 3, au moins une nervure (7) de vidange étant formée dans ou sur ladite paroi (27) de l'unité (2) de cuve pour guider du liquide indésirable sur la surface de la paroi (27), le support (8) de connecteur étant disposé sur la paroi (27) de telle façon que le tronçon (11c) de pontage enjambe la nervure (7) de vidange.

5. Machine (1) à laver selon l'une des revendications précédentes, l'élément ou les éléments de fixation comportant au moins un élément (16) d'encliquetage qui peut s'engager dans au moins un évidement (17) de fermoir correspondant pour fixer l'élément de fixation de manière détachable dans une position fermée et fixant ainsi le câble (20) au support (8) de connecteur.

6. Machine (1) à laver selon l'une des revendications précédentes, le support (8) de connecteur comportant au moins une rainure (10), dans laquelle le câble (20) est au moins partiellement placé.

7. Machine (1) à laver selon l'une des revendications précédentes, le câble (20) étant préalablement fixé au support (8) de connecteur lors d'un processus de montage.

8. Machine (1) à laver selon l'une des revendications précédentes, le support (8) de connecteur comportant un plaque (11d) de connecteur qui comprend au moins une attache (18) servant à immobiliser un connecteur ou une fiche (19) reliée au câble (20).

9. Machine (1) à laver selon la revendication 8, la plaque (11d) de connecteur comprenant deux attaches (18) servant à immobiliser un connecteur ou une fiche (19), les attaches étant formées en tant qu'éléments d'encliquetage et la prise pouvant être encliquetée sur ceux-ci.

10. Machine (1) à laver selon l'une des revendications précédentes, le support (8) de connecteur étant formé comme une pièce monobloc lors d'un processus de moulage par injection.

11. Machine à laver selon l'une des revendications précédentes, le câble (20) reliant électriquement et/ou électroniquement une unité (6) de capteur à une alimentation électrique et/ou à une unité de traitement et/ou ledit câble (20) étant fixé sur le support (8) de connecteur à une certaine distance de la paroi (27).

12. Machine à laver selon l'une des revendications précédentes, un tambour étant disposé à l'intérieur de l'unité (2) de cuve, celui-ci pouvant être entraîné par une unité d'entraînement comportant une courroie (26) qui s'étend dans une région de la paroi (27) de ladite unité (2) de cuve et à une certaine distance de la paroi (27), ledit support (8) de connecteur fixant le câble (20) à une certaine distance de la courroie (26).
